(19) Europäisches Patentamt
European Patent Office
Office européen des brevets

(11) Publication number: **0 516 144 A1**

(12) **EUROPEAN PATENT APPLICATION**

(21) Application number: **92109089.0**

(51) Int. Cl.⁵: **C08G 77/06**, C08G 77/12, C08G 77/20

(22) Date of filing: **29.05.92**

(30) Priority: **30.05.91 JP 155615/91**

(43) Date of publication of application: **02.12.92 Bulletin 92/49**

(84) Designated Contracting States: **DE FR GB**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Nakashima, Hisataka, c/o Dow Corning T. S. Co. Ltd**
**2-2, Chigusa Kaigan**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **Organopolysilsesquioxane and method for its preparation.**

(57) There is disclosed an organopolysilsesquioxane with the formula

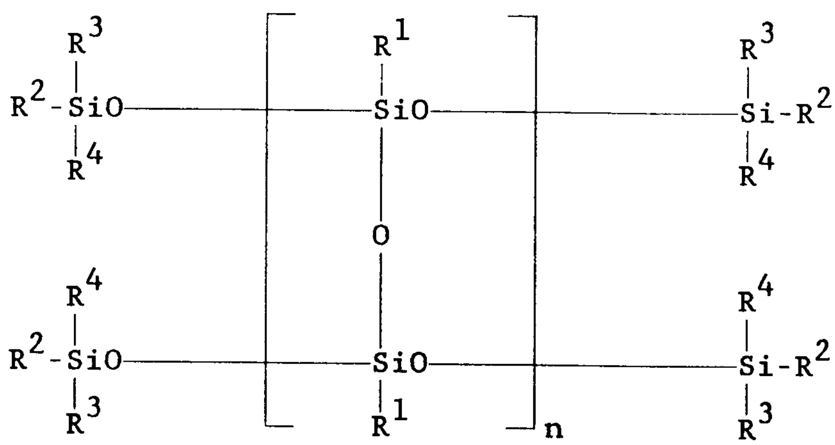

wherein $R^1$ is selected from the group consisting of substituted monovalent hydrocarbon groups and unsubstituted monovalent hydrocarbon groups; $R^2$, $R^3$, and $R^4$ are each selected from the group consisting of a hydrogen atom, unsubstituted monovalent hydrocarbon groups and substituted monovalent hydrocarbon groups, with the proviso that at least one $R^2$, $R^3$ or $R^4$ is selected from the group consisting of hydrogen and an aliphatically unsaturated hydrocarbon group; and n is a positive number, at least 80 weight percent of said organopolysilsesquioxane having a number-average molecular weight of 1,000 to 9,000.

EP 0 516 144 A1

The present invention relates to an organopolysilsesquioxane and a method for the preparation thereof. More specifically, the present invention relates to an organopolysilsesquioxane which has the following characteristics: it has a low molecular weight and narrow molecular weight distribution, at least 80 weight percent of it consists of the fraction having a number-average molecular weight (as determined by gel permeation chromatography calibrated with polystyrene standards) in the range of 1,000 to 9,000, and the siloxy groups at its molecular chain terminals each contain at least 1 silicon-bonded hydrogen atom or aliphatically unsaturated hydrocarbon group. The present invention also relates to a method for the preparation of the aforesaid organopolysilsesquioxane.

Organopolysilsesquioxanes exhibit an excellent heat resistance and electrical insulating performance and, on the basis of these properties, are employed in heat-resistant varnishes, insulating varnishes, and protective insulating films for semiconductor substrates. Organopolysilsesquioxanes are generally prepared by the hydrolysis and condensation of organotrihalosilane, organotrialkoxysilane, or alkali organotrisilanolate.

These methods are exemplified as follows:

(1) hydrolysis and condensation of organotrichlorosilane using a two layer system of ketone and water (Japanese Patent Application Laid Open [Kokai or Unexamined] Number 50-111198 [111,198/75]);
(2) dissolution of methyltrichlorosilane in a mixed solvent of ketone and ether in the presence of amine, then dripping water into this system in order to hydrolyze the methyltrichlorosilane with condensation with heating (Japanese Patent Publication Number 60-17214 [17,214/85]);
(3) dissolution of lower alkyltrihalosilane, alkenyltrihalosilane, or aryltrihalosilane in solvent and addition of water to this solution in order to hydrolyze and condense said halosilane (Japanese Patent Application Laid Open Number 58-59222 [59,222/83]);
(4) hydrolysis of organotrichlorosilane, then dehydration condensation polymerization by heating under a positive nitrogen pressure using organoamine as catalyst, then termination of the condensation polymerization with organomonohalosilane or organomonoisocyanatosilane (Japanese Patent Application Laid Open Number 61-221232 [221,232/86]);
(5) reaction of hydroxyl-terminated organopolysilsesquioxane with unsaturated group-containing alkoxysilane (Japanese Patent Application Laid Open Number 57-12057 [12,057/82]); and
(6) reaction of hydroxyl-terminated organopolysilsesquioxane with unsaturated hydrocarbon group-containing chlorosilane (Japanese Patent Publication Number 63-13446 [13,446/88]).

However, because the methods disclosed in Japanese Patent Application Laid Open Number 50-111198, Japanese Patent Publication Number 60-17214, and Japanese Patent Application Laid Open Number 58-59222 employ hydrolysis of organotrichlorosilane in the presence of amine (e.g., triethylamine, ethylenediamine, and so forth) or sodium hydroxide, regulation of the molecular weight and molecular weight distribution of the organopolysilsesquioxane product is highly problematic. Moreover, these methods produce organopolysilsesquioxane with a number-average molecular weight (as determined by gel permeation chromatography calibrated with polystyrene standards) of several tens of thousands and cannot produce low-molecular-weight organopolysilsesquioxane. Finally, the organopolysilsesquioxane afforded by these methods is restricted in its applications because it has a broad molecular weight distribution and carries the hydroxyl group at its molecular chain terminals.

In the case of the methods disclosed in Japanese Patent Application Laid Open Number 61-221232, Japanese Patent Application Laid Open Number 57-12057, and Japanese Patent Publication Number 63-13446, the molecular chain terminals of the organopolysilsesquioxane product are limited to the trimethylsiloxy group or an unsaturated group with the formula

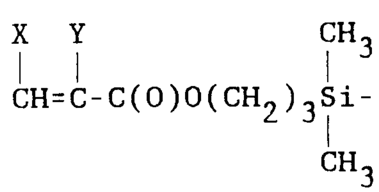

wherein X = hydrogen, phenyl, or halogen-substituted phenyl and Y = hydrogen, methyl, or ethyl. Furthermore, these organopolysilsesquioxane products also suffer from a broad molecular weight distribution since the organotrichlorosilane is hydrolyzed by a conventional technique.

In Japanese Patent Application Number 2-23011 [23,011/90] (JP 3-227321), the present inventor proposed organopolysilsesquioxane afforded by the hydrolysis and condensation of organotrihalosilane in a buffer solution. This organopolysilsesquioxane has a low molecular weight and a narrow molecular weight distribution, and its number-average molecular weight (as determined by gel permeation chromatography calibrated with polystyrene standards) can be regulated or adjusted. A method for the preparation of this organopolysilsesquioxane is also proposed in Japanese Patent Application Number 2-23011. Nevertheless, the organopolysilsesquioxane proposed in Japanese Patent Application Number 2-23011 is limited in its applications because its molecular chain terminals are hydroxyl groups.

The present invention takes as its object the introduction of an organopolysilsesquioxane which has a low number-average molecular weight, as determined by gel permeation chromatography calibrated with polystyrene standards, which also has a narrow molecular weight distribution, and which has at least one silicon-bonded hydrogen atom or aliphatically unsaturated hydrocarbon group in each siloxy group at the molecular chain terminals. A further object of the present invention is the introduction of a method for the preparation of said organopolysilsesquioxane.

The present invention relates to an organopolysilsesquioxane with the formula

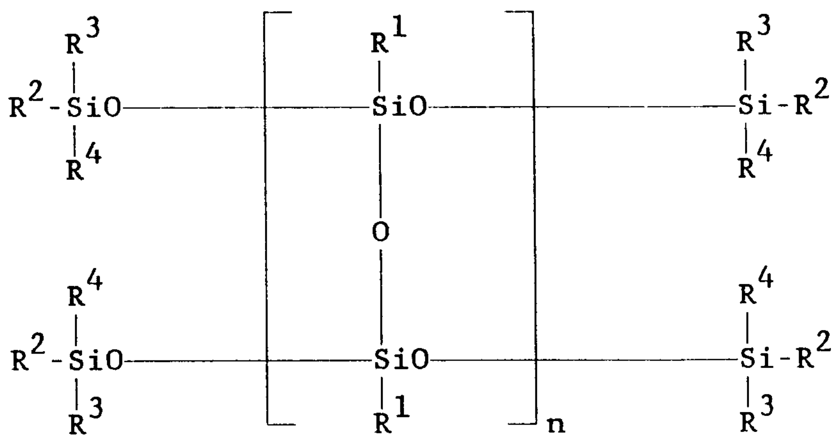

wherein $R^1$ is a substituted or unsubstituted monovalent hydrocarbon group; $R^2$, $R^3$, and $R^4$ are each selected from the group consisting of a hydrogen atom, unsubstituted monovalent hydrocarbon groups and substituted monovalent hydrocarbon groups, with the proviso that at least one $R^2$, $R^3$ or $R^4$ is selected from the group consisting of hydrogen and an aliphatically unsaturated hydrocarbon group; and n is a positive number, at least 80 weight percent of said organopolysilsesquioxane having a number-average molecular weight of 1,000 to 9,000.

The organopolysilsesquioxane according to the present invention has the following formula.

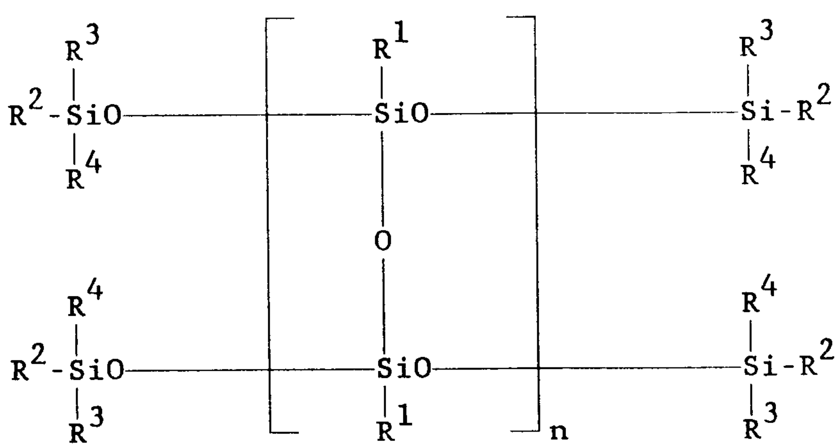

wherein $R^1$ represents substituted or unsubstituted monovalent hydrocarbon groups, and examples in this regard are alkyl groups such methyl, ethyl, n-propyl, and isopropyl; alkenyl groups such as vinyl and allyl;

aryl groups such as phenyl, tolyl, and xylyl; and halogen-substituted alkyl groups such as chloromethyl, trichloroethyl, and chloropropyl. $R^2$, $R^3$, and $R^4$ each represent hydrogen or substituted or unsubstituted monovalent hydrocarbon groups. The groups $R^2$, $R^3$, and $R^4$ are concretely exemplified by the hydrogen atom; alkyl groups such as methyl, ethyl, n-propyl, and isopropyl; aryl groups such as phenyl, tolyl, and xylyl; alkenyl groups such as vinyl, allyl, butenyl, and hexenyl; and halogen-substituted alkyl groups such as chloromethyl, trichloroethyl, and chloropropyl. At least one of the groups $R^2$, $R^3$, and $R^4$ must be the hydrogen atom or an aliphatically unsaturated hydrocarbon group such as vinyl, allyl, and so forth. In the above formula, n is a positive number which indicates the average degree of polymerization; it has values such that the fraction with number-average molecular weight (as determined by gel permeation chromatography calibrated with polystyrene standards) within the range of 1,000 to 9,000 comprises at least 80 weight percent of the organopolysilsesquioxane.

The fraction with number-average molecular weight (as determined by gel permeation chromatography calibrated with polystyrene standards) within the range of 1,000 to 9,000 must comprise at least 80 weight percent of the organopolysilsesquioxane according to the present invention. In the case of a higher-molecular-weight organopolysilsesquioxane which contains less than 80 weight percent fraction with number-average molecular weight in the range of 1,000 to 9,000, the organopolysilsesquioxane has a poor solubility in organic solvents and its applications are thereby limited. On the other hand, the film-formability is poor in the case of a lower-molecular-weight organopolysilsesquioxane which contains less than 80 weight percent fraction with number-average molecular weight in the range of 1,000 to 9,000.

The organopolysilsesquioxane according to the present invention can be prepared by forming a two-layer system comprising an aqueous layer which contains dissolved lower aliphatic alcohol and alkali metal carboxylate and an organic solvent layer which is not soluble in water in any proportion. An organotrihalosilane having the formula $R^1SiX_3$ is hydrolyzed and condensed in the aforesaid system and the product obtained therefrom is reacted with a disilazane having the formula $(R^2R^3R^4Si)_2NH$. In the above formulas, X is halogen and $R^1$, $R^2$, $R^3$ and $R^4$ have their previously defined meanings with the proviso that at least one of $R^2$, $R^3$, and $R^4$ is hydrogen or an aliphatically unsaturated hydrocarbon group.

The organopolysilsesquioxane according to the present invention can also be prepared by the above procedure wherein a monohalosilane of the formula $R^2R^3R^4SiX$ is used in place of the above mentioned disilazane, wherein X, $R^2$, $R^3$, and $R^4$ are as defined above and wherein at least one of $R^2$, $R^3$, and $R^4$ is hydrogen atom or an aliphatically unsaturated hydrocarbon group.

In each of the methods according to the present invention, a solution is first prepared in which there are formed two layers: an aqueous layer in which lower aliphatic alcohol and alkali metal carboxylate are dissolved and an organic solvent layer which is not soluble in water in any proportion. The organic solvent used within the context of the present invention may be any organic solvent which is immiscible with water in any proportion, and examples in this regard are aliphatic hydrocarbons such as hexane, heptane, octane, and nonane, and aromatic hydrocarbons such as benzene, toluene, and xylene. While the quantity of organic solvent used is not specifically restricted, its use at 50 to 300 weight parts per 100 weight parts water is preferred from the standpoints of economics and the solubilities of the starting material and product. Hydrolysis of organotrichlorosilane and ensuing condensation of the hydrolyzate in this water/organic solvent solution afford hydroxyl-terminated organopolysilsesquioxane which is the starting material for the organopolysilsesquioxane according to the present invention.

The organotrihalosilane employed by the present invention has the formula $R^1SiX_3$ wherein X is halogen and $R^1$ encompasses substituted and unsubstituted monovalent hydrocarbon groups, and concrete examples in this regard are the same as above, for example, alkyl groups such as methyl, ethyl, n-propyl, and isopropyl; alkenyl groups such as vinyl and allyl; aryl groups such as phenyl, tolyl, and xylyl; and halogen-substituted alkyl groups such as chloromethyl, trichloroethyl, and chloropropyl. X in the preceding formula is a halogen atom, e.g., fluorine, chlorine, bromine, or iodine, but is preferably chlorine or bromine. The organotrihalosilane may be employed in any desired quantity, but is preferably used within the range of 1 to 100 weight parts per 100 weight parts water. The technique for adding the organotrihalosilane is exemplified by dripping in a solution prepared beforehand by dissolving the organotrihalosilane in organic solvent.

The alkali metal carboxylate employed by the present invention functions to capture the hydrogen halide evolved by organotrihalosilane hydrolysis. Moreover, a buffer solution is formed from the combination of the alkali metal carboxylate and carboxylic acid secondarily produced in this reaction, and this functions to prevent the organopolysilsesquioxane product from reaching high molecular weights. The characteristic feature of the preparative methods according to the present invention is that, through this execution of organotrihalosilane hydrolysis and condensation in buffer solution, they can produce organopolysilsesquioxane which has at least an 80 weight percent fraction with number-average molecular weight in the range of 1,000 to 9,000 (as determined by gel permeation chromatography calibrated with polystyrene standards).

Useable alkali metal carboxylates are exemplified by sodium formate, potassium formate, lithium acetate, cesium acetate, sodium acetate, sodium propionate, potassium propionate, and the like. The alkali metal carboxylate should be used at 20 to 100 weight parts per 100 weight parts water and preferably at 40 to 60 weight parts per 100 weight parts water.

The lower aliphatic alcohol used by the present invention functions as a cosolvent for the water and organic solvent and promotes transfer into the organic solvent layer of the organopolysilsesquioxane produced in the aqueous layer. It also promotes organotrihalosilane hydrolysis. Useable lower aliphatic alcohols are exemplified by methanol, ethanol, n-propanol, isopropanol, n-butanol, etc. The lower alcohol is preferably used at 1 to 100 weight parts per 100 weight parts water.

The stirring rate for the mixed solution during organotrihalosilane hydrolysis must be regulated to permit the formation of two layers (water and organic solvent). When organotrihalosilane hydrolysis is run in a water/organic solvent suspension, an insoluble gel is produced rather than organopolysilsesquioxane.

The disilazane employed by the present invention has the formula $(R^2R^3R^4Si)_2NH$ and it is used to block the molecular chain terminals of the organopolysilsesquioxane with siloxy groups. $R^2$, $R^3$, and $R^4$ in the preceding formula have their previously defined meanings. Again, at least one of the groups $R^2$, $R^3$, and $R^4$ must be hydrogen or an aliphatically unsaturated hydrocarbon group. This disilazane is exemplified by tetramethyldisilazane, tetraethyldisilazane, tetramethyldivinyldisilazane, and tetraethyldivinyldisilazane.

The organomonohalosilane employed by the present invention has the formula $R^2R^3R^4SiX$ and it is also used to block the molecular chain terminals of the organopolysilsesquioxane with siloxy groups. $R^2$, $R^3$, and $R^4$ in the preceding formula comprise the hydrogen atom and substituted and unsubstituted monovalent hydrocarbon groups, and these are exemplified by the groups reported above. At least one of the groups $R^2$, $R^3$, and $R^4$ must be the hydrogen atom or an aliphatically unsaturated hydrocarbon group. X is a halogen atom, i.e., fluorine, chlorine, bromine, or iodine, with chlorine and bromine being preferred. This organomonohalosilane is concretely exemplified by dimethylhydrogenchlorosilane, dimethylhydrogenbromosilane, diethylhydrogenchlorosilane, diphenylhydrogenchlorosilane, dimethylvinylchlorosilane, and diphenylvinylchlorosilane.

The preparative methods according to the present invention encompass, for example, a separate, preliminary preparation of the hydroxyl-terminated organopolysilsesquioxane followed by its reaction with the above-described disilazane or monochlorosilane in the presence of a hydrogen halide acceptor such as triethylamine, or, alternatively, organotrihalosilane hydrolysis and condensation followed by addition of the monohalosilane to the system. The alkali metal carboxylate present in the system functions as hydrogen halide acceptor in the latter technique.

The disilazane or organohalosilane is preferably used at 1 to 100 weight parts per 100 weight parts hydroxyl-terminated organopolysilsesquioxane. When the disilazane or organomonohalosilane is used at less than 1 weight part per 100 weight parts hydroxyl-terminated organopolysilsesquioxane, the introduction ratio of siloxy groups at the molecular chain terminals of the organopolysilsesquioxane will be too low. On the other hand, the use of more than 100 weight parts per 100 weight parts hydroxyl-terminated organopolysilsesquioxane is excessive.

The hydrogen halide acceptor employed by the present invention is concretely exemplified by ammonia, methylamine, diethylamine, triethylamine, and pyridine. One to two moles of acceptor is preferably used per mole of organohalosilane. In addition, while the disilazane typically can react at low temperatures with the hydroxyl groups at the molecular chain terminals of the organopolysilsesquioxane, it may be deployed in combination with triorganohalosilane, etc., in order to accelerate the reaction.

The reaction according to the present invention between disilazane or monohalosilane and hydroxyl-terminated organopolysilsesquioxane is preferably run in organic solvent. Organic solvents useable in this regard are exemplified by the aliphatic hydrocarbons and aromatic hydrocarbons reported hereinbefore. The use quantity for the organic solvent is not specifically restricted as long as dissolution of the organopolysilsesquioxane and stirring to homogeneity is possible.

Because the organopolysilsesquioxane according to the present invention contains at least one Si-bonded hydrogen atom or aliphatically unsaturated hydrocarbon group in each siloxy group at the molecular chain terminals, it can be employed as a reactive component in platinum-catalyzed curable organopolysiloxane compositions. Organopolysilsesquioxane bearing organofunctional groups at the molecular chain terminals can also be prepared from it by addition reaction with organofunctionalized SiH-containing silicon compound or organofunctionalized aliphatically unsaturated hydrocarbon.

The present invention is explained in greater detail below through illustrative examples. In the examples, the molecular weight distribution is characterized by the dispersity (i.e., weight-average molecular weight/number-average molecular weight). Unless indicated to the contrary, all proportions and percentages are on a weight basis.

Example 1

Water (1,500 g) was introduced into a 5 L flask equipped with stirrer, thermometer, and addition funnel. Anhydrous sodium acetate (750 g) was then introduced with stirring and was completely dissolved. This was followed by the addition of isopropanol (293 g) and xylene (1,343 g). While regulating the stirring rate so two layers were formed (xylene layer and water layer), methyltrichlorosilane (368 g) was dripped in over 3.8 hours followed by stirring for an additional 22.5 hours. The reaction mixture was transferred to a 3 L separatory funnel, the aqueous layer was discharged, and washing with water was then conducted until the wash water was neutral. The xylene layer was transferred to a 2 L flask equipped with stirrer, thermometer, and reflux condenser equipped with water separator. Water was removed during heating under reflux for 5 hours. The xylene solution was subsequently filtered using a glass filter, and the xylene was then removed in vacuo to afford hydroxyl-terminated methylpolysilsesquioxane (160.4 g).

Into a 1 L flask equipped with stirrer, reflux condenser, addition funnel, and thermometer were introduced xylene (560 g) and the previously synthesized hydroxyl-terminated methylpolysilsesquioxane (66.0 g) with stirring to complete dissolution. Triethylamine (23.3 g) was then added. Dimethylvinylchlorosilane (22.9 g) was dripped in over 30 minutes with stirring followed by stirring for an additional 2 hours. The hydrochloride salt of the triethylamine was filtered off using a glass filter, and the filtrate was heated in vacuo to give 82.1 g of methylpolysilsesquioxane having the dimethylvinylsiloxy group at the molecular chain terminals. This methylpolysilsesquioxane had a vinyl group content of 2.99 weight%. Its number-average molecular weight (as determined by gel permeation chromatography calibrated with polystyrene standards) was 5,200, it contained 89%, fraction with number-average molecular weight in the range of 1,000 to 9,000, and its dispersity was 2.61.

Example 2

Into a 1 L flask equipped with stirrer, reflux condenser, addition funnel, and thermometer were introduced xylene (690 g) and the hydroxyl-terminated methylpolysilsesquioxane (50.8 g) synthesized in Example 1 with stirring to complete dissolution. Triethylamine (18.1 g) was then added. Dimethylchlorosilane (14.1 g) was dripped in over 30 minutes with stirring followed by stirring for an additional 1 hour. Methanol (5 g) was then added and the reaction was stirred for an additional 20 minutes. The hydrochloride salt of the triethylamine was filtered off using a glass filter, and the filtrate was heated in vacuo to give 48.3 g of methylpolysilsesquioxane having the dimethylhydrogensiloxy group at the molecular chain terminals. This methylpolysilsesquioxane had a silicon-bonded hydrogen content of 0.11 weight%. Its number-average molecular weight (as determined by gel permeation chromatography calibrated with polystyrene standards) was 5,400, it contained 88% fraction with number-average molecular weight in the range of 1,000 to 9,000, and its dispersity was 3.45.

Example 3

Water (1,600 g) was introduced into a 5 L flask equipped with stirrer, thermometer, and addition funnel. Anhydrous sodium acetate (800 g) was then introduced with stirring and was completely dissolved. This was followed by the addition of isopropanol (312 g) and xylene (1,432 g). While regulating the stirring rate so two layers were formed (xylene layer and water layer), ethyltrichlorosilane (425 g) was dripped in over 4 hours followed by stirring for an additional 23.4 hours. The reaction mixture was transferred to a 5 L separatory funnel, the aqueous layer was discharged, and washing with water was then conducted until the wash water was neutral. The xylene layer was transferred to a 5 L flask equipped with stirrer, thermometer, and reflux condenser equipped with water separator. Water was removed during heating under reflux for 5 hours. The xylene solution was subsequently filtered using a glass filter, and the xylene was then removed in vacuo to afford hydroxyl-terminated ethylpolysilsesquioxane (200.4 g).

Into a 1 L flask equipped with stirrer, reflux condenser, addition funnel, and thermometer were introduced toluene (680 g) and the previously synthesized hydroxyl-terminated ethylpolysilsesquioxane (59.1 g) with stirring to complete dissolution. Ammonia gas was then supplied for 10 minutes at a flow rate of 0.3 L/minute, and dimethylvinylchlorosilane (10.0 g) was dripped in over 20 minutes. The ammonium chloride was filtered off using a glass filter, and the filtrate was heated in vacuo to give 68.2 g of ethylpolysilsesquioxane having the dimethylvinylsiloxy group at the molecular chain terminals. This ethylpolysilsesquioxane had a vinyl group content of 2.71 weight%. Its number-average molecular weight (as determined by gel permeation chromatography calibrated with polystyrene standards) was 5,900, it contained 82% fraction with number-average molecular weight in the range of 1,000 to 9,000, and its

dispersity was 2.89.

Example 4

Into a 1 L flask equipped with stirrer, reflux condenser, addition funnel, and thermometer were introduced toluene (659 g) and the hydroxyl-terminated ethylpolysilsesquioxane (67.5 g) synthesized in Example 3 with stirring to complete dissolution. Ammonia gas was then supplied for 9 minutes at a flow rate of 0.3 L/minute, and dimethylchlorosilane (8.99 g) was dripped in over 20 minutes. The ammonium chloride was filtered off using a glass filter, and the filtrate was heated in vacuo to give 75.5 g of ethylpolysilsesquioxane having the dimethylhydrogensiloxy group at the molecular chain terminals. This ethylpolysilsesquioxane had a silicon-bonded hydrogen atom content of 0.081 weight%. Its number-average molecular weight (as determined by gel permeation chromatography calibrated with polystyrene standards) was 5,800, it contained 84% fraction with number-average molecular weight in the range of 1,000 to 9,000, and its dispersity was 3.51.

Example 5

Into a 2 L flask equipped with stirrer, reflux condenser, addition funnel, and thermometer were introduced toluene (750 g) and the hydroxyl-terminated methylpolysilsesquioxane (78.2 g) synthesized in Example 1 with stirring to complete dissolution. Trifluoroacetic acid (0.014 g) was then added, and 1,1,3,3-tetramethyldisilazane (18.4 g) was dripped in over 30 minutes. After stirring for an additional 24 hours at room temperature, unreacted material and the toluene were removed by heating in vacuo to give 72.7 g of methylpolysilsesquioxane having the dimethylhydrogensiloxy group at the molecular chain terminals. This methylpolysilsesquioxane had a silicon-bonded hydrogen content of 0.095 weight%. Its number-average molecular weight (as determined by gel permeation chromatography calibrated with polystyrene standards) was 5,800, it contained 83% fraction with number-average molecular weight in the range of 1,000 to 9,000, and its dispersity was 3.39.

Example 6

Water (264 g) was introduced into a 1 L flask equipped with stirrer, reflux condenser, addition funnel, and thermometer. Anhydrous sodium acetate (132 g) was then introduced with stirring and was completely dissolved. This was followed by the addition of isopropanol (52 g) and toluene (236 g). While regulating the stirring rate so two layers were formed (toluene layer and water layer), phenyltrichlorosilane (91 g) was dripped in over 1.2 hours followed by stirring for an additional 20.8 hours. The reaction mixture was transferred to a 1 L separatory funnel, the aqueous layer was discharged, and washing with water was then conducted until the wash water was neutral. The toluene layer was transferred to a 0.5 L flask equipped with stirrer, thermometer, and reflux condenser equipped with water separator. Water was removed during heating under reflux for 5 hours to afford hydroxyl-terminated phenylpolysilsesquioxane (57.8 g).

Into a 0.1 L flask equipped with stirrer, reflux condenser, addition funnel, and thermometer were introduced toluene (40 g) and the previously synthesized hydroxyl-terminated phenylpolysilsesquioxane (2.5 g) with stirring to complete dissolution. Trifluoroacetic acid (0.002 g) was then added, and 1,1,3,3-tetramethyldisilazane (0.88 g) was dripped in. After stirring for an additional 24 hours at room temperature, unreacted material and the toluene were removed by heating in vacuo to give 1.6 g of phenylpolysilsesquioxane having the dimethylhydrogensiloxy group at the molecular chain terminals. This phenylpolysilsesquioxane had a silicon-bonded hydrogen content of 0.13%. Its number-average molecular weight (as determined by gel permeation chromatography calibrated with polystyrene standards) was 1,800, it contained 91% fraction with number-average molecular weight in the range of 1,000 to 9,000, and its dispersity was 1.41.

## Claims

**1.** An organopolysilsesquioxane with the formula

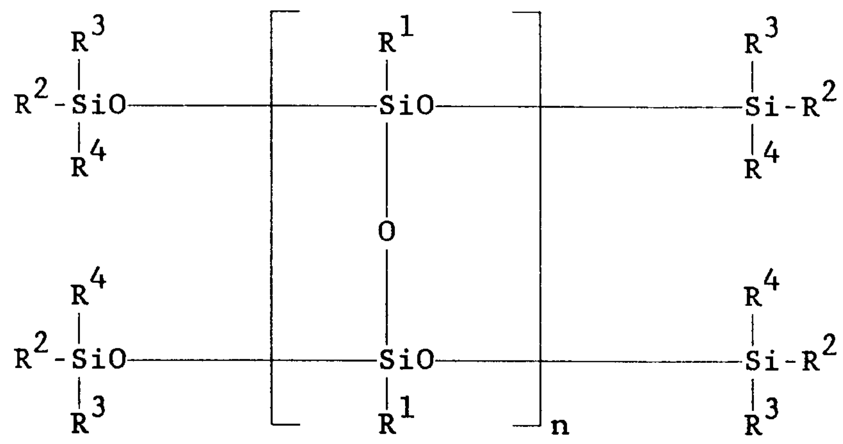

wherein $R^1$ is selected from the group consisting of substituted monovalent hydrocarbon groups and unsubstituted monovalent hydrocarbon groups; $R^2$, $R^3$, and $R^4$ are each selected from the group consisting of a hydrogen atom, unsubstituted monovalent hydrocarbon groups and substituted monovalent hydrocarbon groups, with the proviso that at least one $R^2$, $R^3$ or $R^4$ is selected from the group consisting of hydrogen and an aliphatically unsaturated hydrocarbon group; and n is a positive number, at least 80 weight percent of said organopolysilsesquioxane having a number-average molecular weight of 1,000 to 9,000.

**2.** An organopolysilsesquioxane prepared by a method comprising:

(I) forming a two-layer system comprising

(A) an aqueous layer which contains dissolved lower aliphatic alcohol and an alkali metal carboxylate and

(B) an organic solvent layer which is not soluble in water in any proportion;

(II) hydrolyzing and condensing an organotrihalosilane in said two-layer system, said organotrihalosilane having the formula

$R^1SiX_3$

wherein $R^1$ is selected from the group consisting of substituted monovalent hydrocarbon groups and unsubstituted monovalent hydrocarbon groups and X is halogen;

(III) reacting the product obtained in step (II) with a compound selected from the group consisting of a disilazane having the formula $(R^2R^3R^4Si)_2NH$ and a monohalosilane having the formula $R^2R^3R^4SiX$, wherein X is halogen, $R^2$, $R^3$, and $R^4$ are each selected from the group consisting of a hydrogen atom, unsubstituted monovalent hydrocarbon groups and substituted monovalent hydrocarbon groups, with the proviso that at least one $R^2$, $R^3$ or $R^4$ is selected from the group consisting of hydrogen and an aliphatically unsaturated hydrocarbon group,

with the further proviso that at least 80 weight percent of said organopolysilsesquioxane has a number-average molecular weight of 1,000 to 9,000.

European Patent Office

# EUROPEAN SEARCH REPORT

Application Number

EP 92 10 9089

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,P, D | JAPANESE PATENTS REPORTS<br>Derwent Publications Ltd., London, GB;<br>AN 91-336934<br>& JP-A-3 227 321 (TORAY DOW CORNING) 8 October 1991<br>* abstract *<br>--- | 1,2 | C08G77/06<br>C08G77/12<br>C08G77/20 |
| Y | EP-A-0 198 976 (FUJITSU LTD)<br>* examples 1,4 *<br>--- | 1,2 | |
| Y | EP-A-0 208 285 (WACKER-CHEMIE)<br>* claims 1,2 *<br>----- | 1,2 | |
| | | | TECHNICAL FIELDS SEARCHED (Int. Cl.5 ) |
| | | | C08G |

The present search report has been drawn up for all claims

| Place of search | Date of completion of the search | Examiner |
|---|---|---|
| THE HAGUE | 04 SEPTEMBER 1992 | LENTZ J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)